# EUROPEAN PATENT SPECIFICATION

(11) **EP 4 194 806 B1**
(45) Date of publication and mention of the grant of the patent: **09.10.2024**
(21) Application number: 21213394.6
(22) Date of filing: 09.12.2021
(51) Int. Cl.: G01C 15/06, G06F 3/01

(54) **MOTION-BASED CONTROL FOR A SURVEYING SYSTEM**
BEWEGUNGSBASIERTE STEUERUNG FÜR EIN VERMESSUNGSSYSTEM
COMMANDE BASÉE SUR LE MOUVEMENT POUR UN SYSTÈME D'ARPENTAGE

(43) Date of publication of application: 14.06.2023
(73) Proprietor: Hexagon Technology Center GmbH, 9435 Heerbrugg (CH)
(72) Inventor: REIMANN, Bernd, CH-9435 Heerbrugg (CH); BADE, Nicholas, CH-9443 Widnau (CH); KOMPOSCH, Sybille Verena, A-6800 Feldkirch (AT); NIEL, Elias, A-6850 Dornbirn (AT); RÜST, Philipp Lukas, CH-9100 Herisau (CH)
(74) Representative: Kaminski Harmann

(56) References cited:
- EP-A1- 3 198 303
- EP-A1- 3 306 347
- EP-B1- 2 909 579

## Description

The present invention pertains to a surveying system for measuring the position of a point using a survey pole and to a computer-implemented method for controlling such a surveying system. Particularly, the invention pertains to a surveying system comprising a pole equipped with an inertial measurement unit (IMU), wherein data from the IMU is used to derive motion patterns of the pole and wherein the surveying system automatically performs actions or workflows associated with the derived motion pattern.

A motion state can be a special case of a motion pattern. For instance, in a case in which the pole rests in a certain position over a certain period of time, so that the IMU detects no or basically no movements during this period of time, this lack of movements and the period of time without movements can be regarded as a motion state as a special case of a motion pattern.

In many geodetic applications, points are surveyed by positioning specially configured target objects at them. These target objects usually comprise a pole having a targetable marking, reflector or prism for defining the measurement distance or the measuring point. Using a geodetic surveying apparatus, such as a total station, a relatively large number of such target objects can be surveyed. In other geodetic applications, the pole comprises a GNSS antenna - i.e. either in addition to a reflective target or as an alternative.

Modern total stations have microprocessors for digital post-processing and storage of acquired measurement data. These devices are generally produced in a compact and integrated design, usually with coaxial distance and angle measurement elements as well as calculation, control and storage units integrated in one device. Often, means for motorizing the target optics, for reflectorless distance measurement, for automatic target search and tracking and for remote control of the entire apparatus are integrated. Total stations known from the prior art furthermore have a radio data interface for setting up a radio link to external peripheral components, for example to a data acquisition apparatus which, in particular, may be formed as a hand-held data logger, remote control unit, array processor, notebook, small computer or PDA. By means of the data interface, measurement data acquired and stored by the total station can be output to external post-processing, and externally acquired measurement data can be read into the total station for storage and/or post-processing. Also, remote control signals for remote control of the total station or of another external component, particularly in mobile field use, can be input or output, and control software can be transferred into the total station.

During regular operation of a survey pole - independent of whether the pole comprises a GNSS antenna or is operated together with a surveying device, the operator at some time needs to put the pole aside, e.g. have the pole rest against a wall or similar object in the surrounding or against his own shoulder, or drop the pole to the ground. This need arises whenever the operator needs to have both hands available, e.g. while using a handheld device or for marking a previously measured point on the ground.

In order to reduce energy consumption, it would be desirable if during this time, some or all components of the pole or the surveying system, e.g. a GNSS antenna or a total station, could be switched off or turned into a sleep mode automatically, and would be switched on again automatically if the operator resumes the surveying operation.

While the pole is put aside, a surveying instrument tracking the pole might lose its sight at the pole's reflective target. Fast and automatic re-locking of the pole's reflective target by a total station after line of sight has been lost is a known problem. Conventionally, total stations may simply extrapolate the last known movement if line of sight is lost for up to five seconds and then wait for one second at this position. It would be desirable, in order to reduce energy consumption of the surveying instrument, if a search for the reflective target would only be performed when the operator resumes the surveying operation. Also, it would be desirable to improve the speed of resuming the surveying operation, by quickly relocking to the reflective target automatically when the pole is moved back to its operating position.

Surveying systems, in which a survey pole comprises or is equipped with an IMU, are generally disclosed, for instance, in EP 2 909 579 B1, US 10,234,827 B2, EP 3 330 6347 A1, and EP 3 198 303 A1.

It would thus be desirable, if motions, motion patterns and/or motion states of the pole would be detectable in real time and could be used to automatically trigger certain actions or workflows of the surveying system.

It is therefore an object of the present invention to provide an improved surveying system comprising a survey pole.

It is another object of the present invention to provide such a surveying system that is easier to operate. It is a particular object to provide such a surveying system which can be operated by performing certain movements with the pole, particularly by repeating a pre-defined motion pattern.

It is another object of the present invention to provide such a surveying system that has a reduced energy consumption. It is a particular object to provide such a surveying system which can be automatically powered-down while the pole is not used.

It is another object of the present invention to provide such a surveying system which operates faster. It is a particular object to provide such a surveying system which automatically resumes measurements after a break.

At least one of these objects is achieved by the surveying system according to claim 1, the method according to claim 14 and/or the dependent claims of the present invention.

The system comprises a motion tracker configured to receive the IMU data and to derive, based on the IMU data and in real time, motions and/or motion patterns - including motion states - of the survey pole, wherein, if a derived motion or motion pattern corresponds to a defined (e.g. pre- or user-defined) motion pattern (or motion state) of the survey pole, the surveying system is configured to automatically perform an action associated with the defined motion pattern.

The position giving means of the survey pole for instance may comprise a retroreflector, e.g. in the form of a prism, and/or a GNSS antenna.

According to one embodiment, a database of the surveying system comprises a plurality of different defined motion patterns of the survey pole (e.g. either pre-defined or user-defined motion patterns), each defined motion pattern being associated with an action of the surveying system, particularly wherein the control and evaluation has access to the database.

In one embodiment, the control and evaluation unit comprises the database.

According to another embodiment of the surveying system, at least one defined motion pattern is a user-defined motion pattern, and the action associated with said user-defined motion pattern is a user-defined workflow of the surveying system.

In one embodiment, upon selection by a user, the system is configured to run, a definition process, and the control and evaluation unit is configured to determine, based on motion data received during the definition process, the user-defined motion pattern and to associate the determined user-defined motion pattern to the user-selected workflow.

According to the invention, the position giving means comprise a retroreflector, e.g. a prism, and the surveying system comprises a surveying device, e.g. a total station or a tachymeter, that is configured to measure positional parameters of the retroreflector comprising angles and a distance to the retroreflector and to derive a referenced position of the retroreflector.

According to the invention, the survey pole and said surveying device are configured to establish a remote data connection with each other, and the action associated with the determined defined motion pattern relates to a function of the surveying device.

In one embodiment,
- the motion tracker is configured to generate motion data regarding derived motions or motion patterns and to provide the motion data to the control and evaluation unit,
- the control and evaluation unit is configured to determine, based on the motion data, whether a determined motion corresponds to one of the defined motion patterns, and configured to issue a command to perform the action associated with this defined motion pattern to the surveying device, and
- the control and evaluation unit is configured to receive the motion data via the remote data connection or to issue the command to the surveying device via the remote data connection.

According to another embodiment of the surveying system, the position giving means comprise a GNSS antenna, and the surveying system comprises a GNSS processing unit configured to process output signals of the GNSS antenna and to derive a referenced position, orientation and/or velocity of the GNSS antenna based on the output signals.

In one embodiment, a further action associated with the determined defined motion pattern relates to a function of the GNSS antenna and/or the GNSS-processing unit, wherein the motion tracker is configured to generate motion data regarding derived motions or motion patterns and to provide the motion data to the control and evaluation unit, and the control and evaluation unit is configured to determine, based on the motion data, whether a determined motion pattern corresponds to one of the defined motion patterns, and configured to issue a command to perform the action associated with the detected defined motion patterns to the GNSS antenna and/or the GNSS-processing unit, respectively.

According to another embodiment of the surveying system, the motion tracker is configured to determine at least inertial velocity data as part of the motion data. For instance, the motion tracker may be further configured to determine
- inertial attitude data and inertial position data as part of the motion data,
- a velocity as part of the motion data, and/or
- a yaw angle, a pitch angle and a roll angle of the survey pole as part of the motion data.

According to another embodiment, the system is configured to establish a data connection with a remote server computer and to provide IMU data and/or motion data to the remote server computer, the motion data being generated by the motion tracker.

In one embodiment, pre-defined motion patterns stored at the remote server computer, and the system is configured
- to detect typical user behaviour from the IMU data and/or from the motion data,
- to send corresponding IMU data and/or motion data to the remote server computer, wherein the sent data is dedicated to update pre-defined motion patterns stored at the remote server computer, and
- to receive updated pre-defined motion patterns from the remote server computer.

According to another embodiment of the surveying system, the motion tracker uses a machine-learning based algorithm for identifying motions and/or motion patterns, for instance including a Kalman filter.

According to another embodiment of the surveying system, the motion tracker is provided at the survey pole (e.g. integrated in or attached to it) and comprises the inertial measurement unit.

According to another embodiment of the surveying system, the IMU is integrated in the pole or attached to the pole. For instance, the inertial measurement unit may be integrated in the body of the pole or be part of a mobile device, wherein the pole comprises a receptacle for accepting the mobile device. For instance, the inertial measurement unit may be designed as a micro-electro-mechanical system and/or comprise at least three accelerometers in a mutually orthogonal configuration and at least three gyroscopes in a mutually orthogonal configuration.

According to some embodiments of the surveying system, the pre-defined motion patterns comprise a depositing motion pattern of the survey pole, in which the survey pole is moved from an upright position in a recumbent or reclined position.

In one embodiment, deriving motions and/or motion patterns comprises deriving the upright position of the survey pole and at least one of the recumbent or reclined position of the survey pole or a movement of the survey pole from the upright position to the recumbent or reclined position.

In another embodiment, the survey pole remains motionless or basically motionless in the recumbent or reclined position for at least a pre-defined time, e.g. at least five seconds.

In another embodiment, the action associated with the depositing motion pattern comprises stopping tracking of a retroreflector of the survey pole by a surveying device of the surveying system.

According to some embodiments of the surveying system, the pre-defined motion patterns comprise a pick-up motion pattern of the survey pole, in which the survey pole is moved from a recumbent or reclined position in an upright position.

In one embodiment, deriving motions and/or motion patterns comprises deriving the recumbent or reclined position of the survey pole and at least one of the upright position of the survey pole or a movement of the survey pole from the recumbent or reclined position to the upright position.

In another embodiment, the survey pole remains motionless or basically motionless in the recumbent or reclined position for at least a pre-defined time, e.g. at least five seconds. In another embodiment, the action associated with the pick-up motion pattern comprises performing a search by a surveying device of the surveying system for a retroreflector of the survey pole.

According to another embodiment, the pointer tip is configured for providing a punch or centre-punch functionality for physically marking a point on an object, e.g. for marking the measuring point. For this purpose, the pointer tip comprises a spring that is configured and arranged so that it is compressed when the pointer tip is pushed onto the point of the object and released when a predefined amount of compression has been reached. In this case, the defined motion patterns comprise a punch-motion pattern, in which the survey pole is pushed with the pointer tip onto a point of the object and the spring is released. In one embodiment, a further action associated with the punch-motion pattern comprises performing a measurement for deriving the position of the marked point, e.g. the measuring point.

The invention in the following will be described in detail by referring to exemplary embodiments that are accompanied by figures, in which:
- Figs. 1a-b: show two embodiments of a survey pole as part of a surveying system according to the invention, the pole comprising either a retro-reflector or a GNSS antenna as position giving means;
- Fig. 2: shows an exemplary embodiment of a surveying system according to the invention, the surveying system comprising a survey pole and a total station;
- Figs. 3a-b: illustrates a putting aside of the survey pole during a surveying operation with a first and second example of a detectable motion;
- Fig. 4: illustrates automatically resuming the surveying operation after the survey pole is brought back into the operation position with a third and fourth example of a detectable motion that is associated with an action;
- Fig. 5: illustrates data flow in an exemplary embodiment of a surveying system according to the invention;
- Fig. 6: illustrates a fifth example of a detectable motion that is associated with a first action of a GNSS unit of the pole; and
- Fig. 7: illustrates a sixth example of a detectable motion that is associated with a second action of a GNSS unit of the pole.

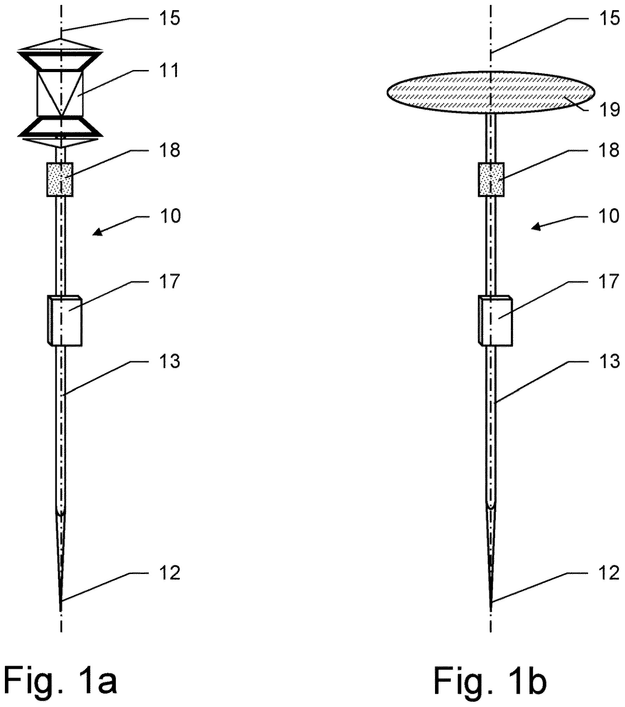

Figures 1a and 1b show a survey pole 10 as part of a surveying system. The survey pole 10 has a rigid, rod-shaped body 13 with a pointer tip 12 for contacting a measuring point on the ground or on an object, e.g. on a wall or ceiling. The body 13 defines a pole axis 15.

Figure 1a shows a first embodiment, in which the pole 10 comprises retro-reflector means 11, e.g. a prism, as position giving means for making available the coordinative determination of a referenced position, the retro-reflector means 11 being positioned on the body 13 at a known position relative to the tip 12. The system also comprises determination means for repeatedly determining the referenced position of the position giving means.

Figure 1b shows a second embodiment of the survey pole 10, in which the pole comprises a GNSS receiver 19 as position giving means for making available the coordinative determination of a referenced position, the GNSS receiver 19 being positioned on the body 13 at a known position relative to the tip 12. The GNSS receiver 19 optionally may be embodied for use with real-time kinematic positioning (RTK), precise point positioning (PPP) or differential GNSS (DGNSS). The system also comprises determination means for repeatedly determining the referenced position of the position giving means.

In both shown embodiments, the survey pole 10 comprises an inertial measurement unit (IMU) 18 placed on the body 13 with a defined spatial relationship relative to the position giving means, wherein the IMU 18 is designed in form of a micro-electro-mechanical system and comprises IMU-sensors including accelerometers and gyroscopes. The pole 10 comprises an evaluation unit 17 for deriving the position of the measuring point 1 at least based on the determined referenced position and on the defined spatial relationship of the position giving means relative to the tip 12.

The shown IMU 18 comprises three accelerometers in a mutually orthogonal configuration, i.e. in a configuration such that their measuring axes are orthogonal to each other, and three gyroscopes in a mutually orthogonal configuration, i.e. in a configuration such that their measuring axes are orthogonal to each other. Other possible setups that deliver high accuracies, special energy saving modes or higher update rates could include additional accelerometer and/or gyroscopes, e.g. with axes aligned in parallel to the before mentioned ones. Optionally, also a magnetometer may be included.

Although the IMU 18 in Figures 1a and 1b is depicted as an external feature of the pole 10, obviously it can also be integrated into the body 13. Alternatively, it can be part of the GNSS receiver 19 or be provided as a separate unit that is attachable to the body 13 or any other part of the pole 10. For instance, the pole 10 may comprise a receptacle for holding the IMU 18 or a mobile device comprising the IMU 18 during operation, such a device could be a smartphone, a field controller or a similar mobile device. Also, the IMU 18 could be provided by other means without being fixedly attached to the pole, as long as it provides IMU data of the pole 10 during operation. For instance, the IMU 18 may be integrated into smart gloves (or similar wearables) worn by the operator 3 holding the pole 10, so that they are loosely attached only during operation. Such gloves may indicate whether the pole is being held or not and the IMU data is interpreted as IMU data of the pole 10 only while it is being held.

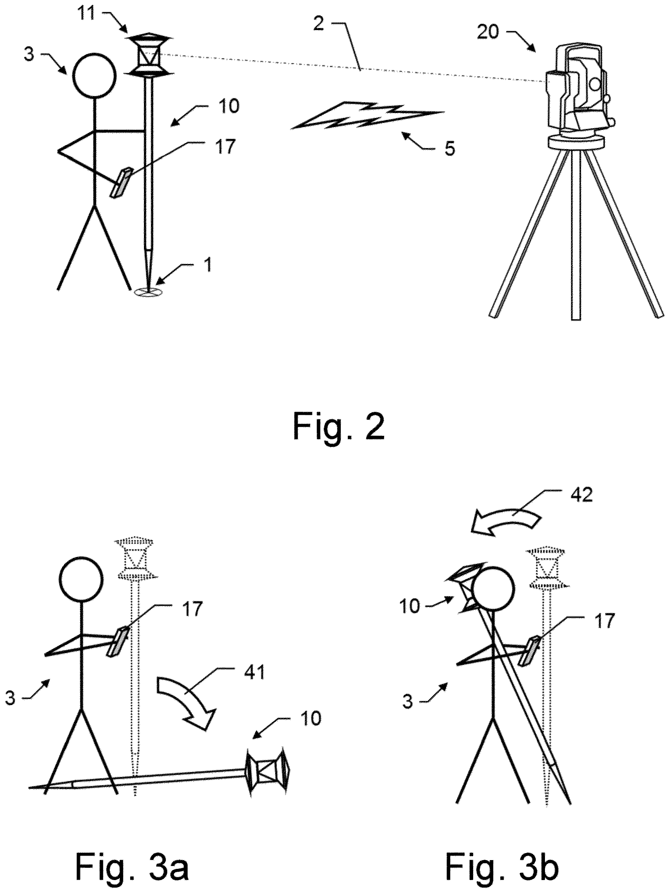

Moreover, the evaluation unit 17, which are depicted in Figures 1a and 1b as an external feature of the pole 10, can also be part of the IMU 18 or the GNSS receiver 19, or integrated into the body 13. Alternatively, the evaluation unit 17 may be provided in a surveying device of the system (e.g. the total station 20 of Figure 2) or may be part of a mobile device, such as a field controller, an accessory of the system or a mobile phone having the necessary software (app) installed.

Optionally, pointer tips may be provided at both ends of the pole 10, so that the retro-reflector means 11 or the GNSS receiver 19 are provided between the two tips (not shown here). Optionally, a pointer tip of the pole 10 may be configured to provide a punch or centre-punch functionality for marking of measuring points (not shown here).

Figure 2 shows an exemplary embodiment of a surveying system according to the invention comprising a survey pole 10 and a surveying device 20 embodied as a total station. The survey pole 10 comprises a retroreflector 11 and an inertial measurement unit (not shown here) as described with respect to Figure 1a. The evaluation unit 17 in this example is configured as a mobile device which is hand-held by a human operator 3 (e.g. surveyor) of the pole 10.

The surveying device is referenced to a reference coordinate system and configured to measure a distance 2 and relative angles to the retroreflector 11 of the pole 10, so that a referenced position of the retroreflector 11 and, thus, the measuring point 1 can be derived.

In some embodiments, a remote data connection 5 between the surveying device 20 and the pole 10 or the control device 17 may be established, e.g. for providing measuring data to the operator 3 or for allowing remote control of the surveying device 20.

Often, as illustrated in Figures 3a and 3b, during regular operation of a survey pole 10, the operator 3 will put the pole 10 aside eventually. In this case, the pole 10 might rest against a wall or similar object in the surrounding or against the shoulder of the operator 3. Also, the operator 3 might put or drop the pole 10 to the ground. This is part of the regular workflow whenever the operator 3 needs to have both hands available, e.g. while using the evaluation unit 17 attached to the pole 10 as a mobile device or for marking a previously measured point on the ground.

In Figure 3a, the operator 3 of the system of Figure 2 has put down the pole 10 to the ground. In Figure 3b, the pole 10 rests on the operator's shoulder. These events can be detected, e.g. with the help of machine learning, so that further events can be triggered.

In some embodiments, the resting itself can be detected. For instance, detecting that the pole 10 rests statically against a wall or shoulder of the operator as shown in Figure 3b allows to update the IMU bias estimate in a sensor fusion algorithm, e.g. comprising a Kalman filter, running on the pole, e.g. a zero-velocity potential update (ZUPT). If the pole rests motionless or basically motionless for a defined time, based on the IMU data, the pole is detected as not being in use, i.e. as being inactive. The defined time may be pre-defined, e.g. five seconds, or selectable by a user, e.g. from a range of 3 to 30 seconds.

Alternatively or additionally, the movements 41, 42 from the operating position to the resting positions on the ground and at the shoulder could be detected as motion patterns. For instance, such a movement 41, 42 and consequent lack of movement for the defined time can be detected based on the IMU data and interpreted as inactivity of the pole 10. As illustrated in Figures 3a and 3b, inactivity of the pole could include resting, standstill and laying positions. However, the operator 3 walking between two measuring points 1, thereby carrying the pole 10 could also be detected based on the IMU data and optionally interpreted as inactivity of the pole 10.

A detected inactivity of the pole 10 could be used to trigger an energy saving mode on the device. For instance, tilt compensation could be temporarily deactivated, or for a pole with GNSS, energy saving would disable real-time kinematic (RTK). Since processing RTK and/or tilt compensation requires a significant amount of processing power, it significantly consumes energy from the battery. A low-power motion state detection model that detects non-usage of the pole 10 or detects that the surveyor 3 moves between different measuring points, e.g. with a resolution of over 1 Hz, allows for a timely triggered energy saving. Preferably, in order to allow an effective energy saving, the continuously running low-power motion state detection consumes as few energy as possible. At the very least, it should consume significantly less energy than the units that can be powered down.

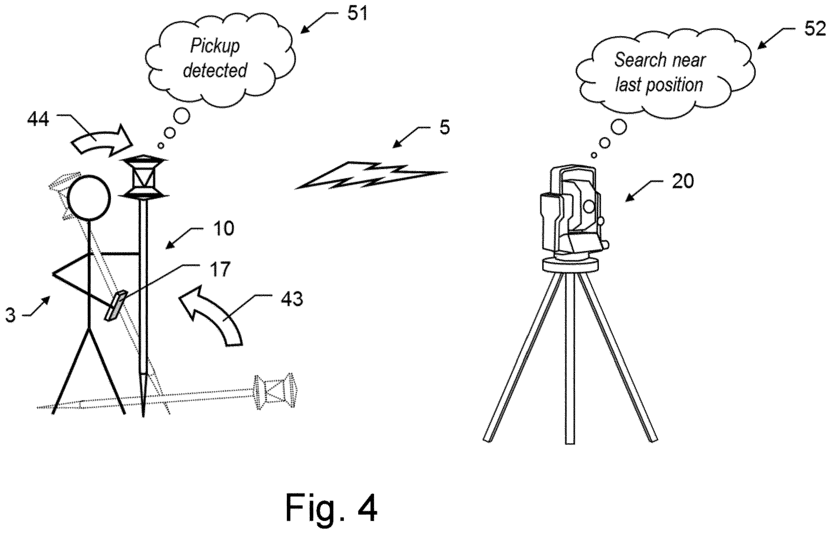

Figure 4 illustrates a situation in which the operator 3 of the surveying system has finished his use of the mobile device 17 (or other break) and now resumes the surveying by moving the pole 10 back into the operating position, i.e. by a picking-up movement 43 or by a repositioning movement 44.

In the shown example, at the pole 10 a movement pattern 51 is detected in the picking-up movement 43 or by a repositioning movement 44 of the pole 10 from its resting position, e.g. laying on the ground where it is out of sight of the surveying device 20. This detected movement pattern 51 (e.g. on combination with the previously detected inactivity) is used for triggering a faster re-lock of the pole 10 by sending a command to the surveying device 20 via the remote data connection 5 to perform a certain action or workflow 52, e.g. a command to perform a search for the pole's reflective target near the last position or near a predicted position (e.g. predicted by means of dead reckoning).

Conventionally, when the line of sight between the prism 11 attached to the pole and the surveying device 20 is lost, the surveying device 20 will perform a search to find the pole 10, e.g. it will start rotating around the horizontal axis and/or the vertical axis searching for a prism 11. However, if the pole 10 is determined to be resting stationary (i.e. being inactive), this power search may be called off and delayed until the pole 10 is determined to be picked up again. If then a pre-defined pick-up motion 51 is detected, a command can be sent to the total station 20 to search near the last known position of the pole 10, narrowing down the search space drastically and, therefore, increasing re-lock speed significantly.

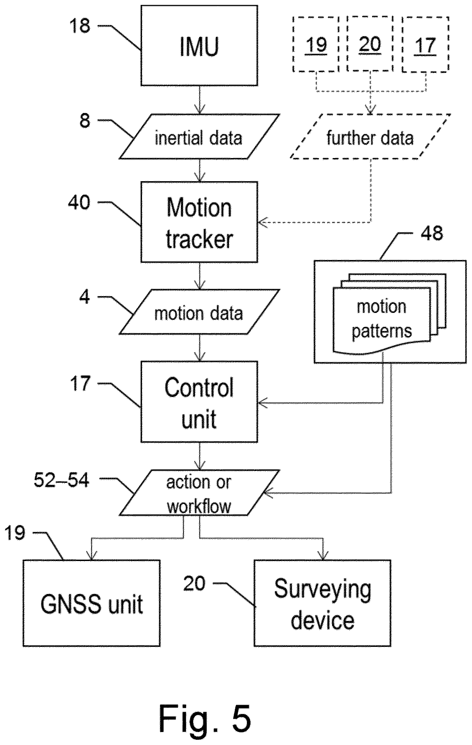

Figure 5 illustrates the flow of data in an exemplary embodiment of a surveying system according to the invention. The IMU 18 of the pole comprises inertial measurement sensors including accelerometers and gyroscopes and is configured to continuously generate inertial data 8 (IMU data). For instance, the IMU 18 comprises at least three accelerometers and at least three gyroscopes, both in mutually orthogonal configurations. Optionally, the IMU 18 can also be designed as a micro-electro-mechanical system.

The inertial data 8 is provided to a motion tracker 40, i.e. a unit or device comprising a motion tracker algorithm. In some embodiments, the IMU 18 and the motion tracker 40 can be embodied as one unit that is provided at the pole. For instance, a field controller attached to the pole may comprise the IMU 18 and a motion tracker algorithm. The motion tracker 40 receives the inertial data 8 and derives, based thereon, actual motions and/or motion patterns of the survey pole.

A control unit, which may be embodied as a control and evaluation unit 17, has access to a database 48 which comprises a plurality of different pre-defined motion patterns of the survey pole, wherein each of the pre-defined motion patterns is associated with an action or workflow of the surveying system, or, more precisely, for one or more units or devices of the surveying system. Database 48 need not necessarily be understood as a database of motion patterns per se, but also can be seen a database of the features corresponding to the motion patterns or rather a database of mathematical functions describing the boundaries between different motion patterns in a projected (non-physical) space.

The motion patterns in the database may also include motion patterns which are used to minimize the error due to pole length, for instance if the target and the IMU are mounted between the pole tip and that part of the pole body that is held by the user, or in case of a pole having tips at both ends. If the pole has more than one pointer tip, e.g. one tip at both ends of the body, the motion patterns may also be used to determine which of the pointer tips is contacting the measurement point.

The motion patterns in the database may include motion patterns connected to inactivity of the pole 10, and the associated action or workflow of the surveying system may comprise powering-down units of the pole 10 or other devices of the surveying system, e.g. a total station. The motion patterns in the database may also include motion patterns connected to a re-activation, i.e. an end of inactivity, of the pole 10, and the associated action or workflow of the surveying system may comprise powering-up units of the pole 10 or other devices of the surveying system again.

The motion patterns in the database may also include motion patterns relevant for an inertial navigation algorithm, particularly if the inertial navigation algorithm is using the same IMU data. Practical examples may include zero velocity updates (no movement detected), upper/lower boundary (human step counting), or tuning of algorithm parameters related to motion (walking, running, driving, etc.).

In some embodiments, the motion tracker 40 and the control and evaluation unit 17 can be embodied as one unit, optionally also comprising the IMU 18. The control and evaluation unit 17 is configured to receive the motion data 4 and to determine, based thereon, whether a derived motion or motion pattern corresponds to one of the plurality of pre-defined motion patterns stored in the database 48. If a derived motion or motion pattern is determined to correspond to one of the predefined motion patterns, a command to perform the workflow 52-54 associated with this pre-defined motion pattern is sent to the respective unit(s) or device (s) of the surveying system, the workflow associated with the determined predefined motion state relating to a function of said unit(s) or device(s). In the shown example, these units and devices comprise a GNSS unit 19 of the pole, e.g. a GNSS antenna and a corresponding GNSS-processing unit, and a surveying device 20, e.g. a total station measuring distances and angles to a prism or similar target of the pole.

Optionally, the motion tracker 40 may receive more data than only the inertial data 8. As shown in Figure 5 in dashed lines, further data, e.g. provided by the GNSS unit 19, the surveying device 20 or the control and evaluation unit 17, can be provided to the motion tracker 40 and be considered for deriving the actual motions and/or motion patterns of the survey pole. The inertial data 8 and the further data may be used as raw data. Alternatively, a fused state estimation using a sensor fusion algorithm (such as a particle filter or a Kalman filter) of the further data can also contribute to the inertial data 8.

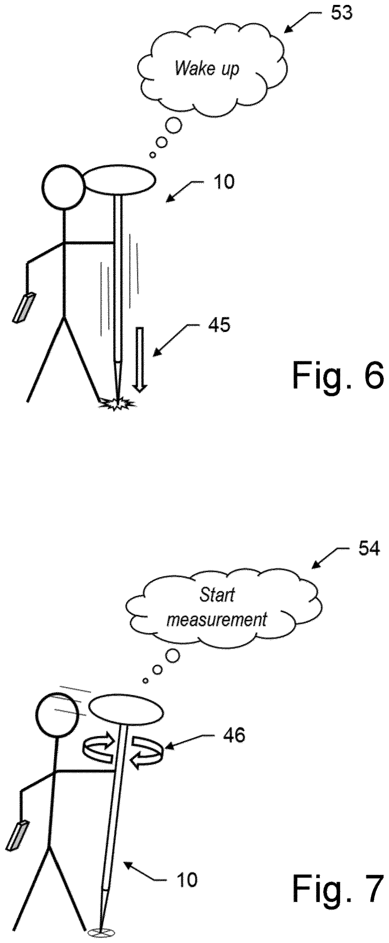

Figure 6 shows an embodiment of a surveying system, in which a survey pole 10 comprises a GNSS unit with a GNSS antenna 19. The operator performs a motion pattern 45 which consists of a linear motion along the vertical axis of the pole, thereby hitting the ground with the pole's tip, e.g. hitting a measuring point. The IMU detects accelerations induced by these motions and the motion tracker identifies the accelerations as a motion pattern 45. The motion pattern 45 is compared to pre-defined motion patterns and identified as being associated with an action 53 of the GNSS unit, e.g. to wake up from an energy saving sleeping mode.

Optionally, the pointer tip is equipped with additional features having an impact on IMU measurements. An example of such a feature is a punch or centre-punch functionality, wherein the pointer tip comprises a pin, a spring and a mechanical guiding system. Such a functionality as part of a survey pole is known per se. Once the pointer tip having the punch or centre-punch functionality is pushed onto an object, e.g. onto a measuring point on the object, the spring is compressed. At a predefined amount of compression, the spring is immediately released by the mechanical guiding system, which causes the pin (e.g. made from hardened steel) to punch a notch into the object, in order to physically mark a point on the object, e.g. as a measuring point. This sequence of events may be related to a punch-motion pattern which is characteristic for the use of the punch or centre-punch functionality. The IMU detects accelerations, particularly those induced by the released spring, and the motion tracker identifies the accelerations as a motion pattern. Upon detecting this motion pattern, a predefined command is issued. For instance, this command may comprise automatically executing a measurement by the surveying system to determine the position of the physically marked point as the measuring point 1.

In Figure 7, in order to indicate that the operator wants to start an automated measurement process, the operator performs a motion pattern 46 which consists of a rotation about the vertical axis while the pole's tip rests on the ground, e.g. on a measuring point. The IMU detects accelerations and rotation rates induced by these motions and the motion tracker identifies the accelerations as a motion pattern 46. The motion pattern 46 is compared to pre-defined motion patterns and identified as being associated with a workflow 54 of the GNSS unit and other units of the pole. A command to perform this workflow 54 is then sent to all involved units. Every workflow 52-54 can be either pre-defined, e.g. provided on the device as pre-installed software, or user-defined, e.g. by adapting a pre-defined workflow or by generating a new workflow.

Preferably, IMU data 8 from a period of more than one second may be used for identifying a motion pattern or motion state, for instance IMU signals from about the last 1.5 seconds or from about the last 2 seconds. A Kalman filter state may be used for determining - using IMU data as well as GNSS data or data derived by the total station - attitude information and optionally also velocity.

One or several machine learning models (ML-models) such as Decision Trees, Random Forests or Support Vector Machines can be trained to classify the current movement into different categories. These models may run on the "edge", i.e. directly at the pole 10 or in another unit or device of the surveying system (e.g. the control unit 17, or the surveying device 20 of Figure 2). Detecting one of the desired events would in turn trigger the corresponding workflow 52-54 by issuing the corresponding commands.

When an ML-model is used, the motion patterns 41-46 are recorded and used to train these models. The data is split into at least two datasets: Into a first dataset which will be used to train the model and into a second dataset which will be used to test and evaluate this model and all further models. The resulting model is then stored on device and available to the control unit 17, the database 48 of motion patterns is not needed on device but can be used for further re-training purposes. The motion patterns 41-46 comprise features extracted from the IMU signals, and optionally attitude and velocity information derived by total station, GNSS and/or IMU measurements which might be fused, e.g. in a Kalman filter. These features can be pre-defined statistics computed in the time and/or frequency domain over a signal of e.g. 1.5 seconds or 2 seconds length. These features are then input to a machine learning algorithm and used to classify the input signal into one or several of the predefined motion pattern classes. When a Neural Network is used, the network will learn and extract features on its own.

Using the pre-trained model(s), users can record additional motion patterns and configure workflows that will be triggered once this pattern is recognized on their own. Alternatively, users can re-record data for pre-defined motion patterns to re-train and individualize the models towards their needs. This is done by recording the motion pattern of the user on device and then either re-training offline (i.e. in the cloud or at a computer where the recorded data and a software would be loaded) or on the device directly. In both cases features would be calculated as before, and - using the previously trained ML-models and/or previously recorded motion patterns - a new training process would be triggered. Furthermore, new data recorded would automatically be split into a training and test dataset. The model would be trained using the new and optionally old training data. The new model can then be loaded onto the device. To assure quality of the model and evaluate its performance, automatic tests can be called to verify that the model's performance has not degraded (regression testing) by using recorded motion patterns from the old and new test datasets.

Recording of additional motion patterns could be achieved automatically. For this, user behaviour (e.g. initiating system actions or workflows by conventionally pressing a button) is logged in a specific user action log together with a certain amount of time-wise preceding IMU data in an accompanied IMU data log. The two logs are then sent to a repository where the logs of potentially many different users are evaluated to find typical user behaviour. This repository could be cloud-based or locally at the customer's site. Based on the method mentioned above, the database 48 of motion patterns 41-46 can be updated.

If one or more of the defined motion pattern are user-defined motion patterns, the actions associated with the user-defined motion patterns may include user-defined workflows of the surveying system.

When the definition process is started by a user, e.g. on a GUI of the control unit 17 or similar device, the control and evaluation unit determines the user-defined motion pattern based on motion data received during the definition process and associates this motion pattern to a workflow, e.g. a user-selected or user-defined workflow.

In some embodiments, detecting motion patterns is at least partially user-trainable. For instance, users may define and record motion data for their own motion patterns and pick from a menu which action or workflow to trigger. Alternatively, the user could record data for predefined motions to allow for better adaption or individualization towards the specific user (re-training or transfer learning). Moreover, user data may be gathered to train new models. For instance, the system might detect typical user behaviour and associated motion patterns. Corresponding data is then sent from the system to a central server, e.g. of the manufacturer. Based on this data, the catalog of motion patterns may be updated and distributed to all systems. It is also possible to run an anomaly detector which would only need a history of typical usage data (assumed to be "normal") and would give rise to alerts when observing outliers.

In some embodiments, different motion patterns could be detected that enable different operating modes. For instance, the system may detect and differentiate between low-dynamic ("slow"), rather steady accelerations and movements (e.g. a pole fixed on a vehicle) vs. high-dynamic ("fast"), chaotic accelerations and movements (e.g. a surveyor carrying a pole around). Depending on the detected movement pattern, a different operating mode can be triggered for the GNSS module or total station, e.g. a high precision mode or a high lockstability mode. Thus, with a modified sampling rate, a higher measurement precision can be achieved for more quiet movements. Or with a field-of-view adaption of the locksensor, the stability and robustness to keep the lock on high-dynamic targets can be improved. Furthermore, other sensors can be set to different sampling rates or field of views. Also, different operation modes could be automatically detected by running a classification algorithm on the IMU signal.

The described motions and motion patterns can be recognized either based on rules, using machine learning or using hybrid approaches.

Recognizing motions and motion patterns based on rules (rule-based) includes using a fixed, more or less manually defined set of rules ("conditions") to identify certain states. An example for a rule-based approach is an energy-saving mode. In a specific case, this could comprise standstill detection or inactivity detection to save energy (e.g.: "if movement falls below threshold in 10s, then inactive"). These conditions can be defined in a data-driven manner and/or can be partially adjusted by the user (e.g. threshold values). The rules can define simple threshold values, comprise "ifthen" conditions or be derived statistically.

Rule-based approaches only allow relatively simple rules and often need manual definitions. Using machine learning (ML), complex patterns or rules can also be recognized and learned. Specifically, a movement phase between two measuring points (i.e. the operator carrying the pole from one measuring point to another) can also be recognized and delimited from the actual measurement. This allows the use of an energy-saving mode even during movements. ML-based algorithms that can be used include decision trees, random forests, SVMs or neural networks. These algorithms can be used both for signal classification and for a detector. During the classification, the last measured values (e.g. two seconds) are used with a defined update frequency (e.g. 2 Hz) and classified by the algorithm. If necessary, a further step "feature extraction" takes place before the algorithm is called. A neural network or other "deep learning" methods learn the features independently; for classic algorithms, defined statistics in the frequency or time domain could be calculated here. Alternatively, the processing of the motion data is carried out in a rolling fashion by continuously processing a continuously generated time series of the motion data.

In the hybrid approach, rule-based approaches are combined with ML models. For example, simple states could be recognized rule-based for energy saving, more complex states using an ML approach. Examples for a hybrid approach comprise a decision tree with relevant situations and ML models running in each case, and, conversely, classification of the processes using ML and then a rule-based approach.

Although the invention is illustrated above, partly with reference to some preferred embodiments, it must be understood that numerous modifications and combinations of different features of the embodiments can be made within the scope of the appended claims.

## Claims

1. Surveying system for measuring the position of a measuring point (1), the surveying system comprising
- a survey pole (10) with a body (13) having a pointer tip (12) for contacting the measuring point (1), and position giving means for making available the coordinative determination of a referenced position, the position giving means being placed on the body (13) with a defined spatial relationship relative to the tip (12), wherein the position giving means comprise a retroreflector (11),
- a surveying device (20) configured to measure positional parameters of the retroreflector (11) comprising angles and a distance (2) to the retroreflector (11) and to derive a referenced position of the retroreflector (11),
- a control and evaluation unit (17) for deriving the position of the measuring point (1) at least based on the determined referenced position and on the defined spatial relationship of the position giving means relative to the tip (12),
- an inertial measurement unit (18) comprising IMU sensors including accelerometers and/or gyroscopes, and being configured to continuously generate IMU data (8) related to a rotational rate and/or acceleration of the pole (10), and
- a motion tracker (40) configured to receive the IMU data (8) and to derive, based on the IMU data and in real time, motions and/or motion patterns (41-46) of the survey pole (10), wherein, if a derived motion or motion pattern corresponds to a defined motion pattern of the survey pole (10), the surveying system is configured to automatically perform an action (52-54) associated with the defined motion pattern,
wherein
- the survey pole (10) and the surveying device (20) are configured to establish a remote data connection (5) with each other, and
- the action (52-54) associated with the determined defined motion pattern relates to a function of the surveying device (20).

2. Surveying system according to claim 1,
**characterized by**
a database (45) comprising a plurality of different defined motion patterns of the survey pole (10), each defined motion pattern being associated with an action (52-54) of the surveying system, particularly wherein
- the control and evaluation unit (17) comprises the database (45) or has access to the database; and/or
- each defined motion pattern is either pre-defined or user-defined.

3. Surveying system according to any one of the preceding claims,
**characterized in that**
at least one defined motion pattern is a user-defined motion pattern, and the action (52-54) associated with the user-defined motion pattern is a user-defined workflow of the surveying system,
particularly wherein the system is configured to run, upon selection by a user, a definition process, wherein the control and evaluation unit (17) is configured to determine, based on motion data (4) received during the definition process, the user-defined motion pattern and to associate the determined user-defined motion pattern to the user-selected workflow.

4. Surveying system according to any one of the preceding claims,
**characterized in that**
the surveying device (20) is a total station or a tachymeter.

5. Surveying system according to any one of the preceding claims,
**characterized in that**
- the motion tracker (40) is configured to generate motion data (4) regarding derived motions or motion patterns and to provide the motion data to the control and evaluation unit (17),
- the control and evaluation unit (17) is configured to determine, based on the motion data (4), whether a determined motion corresponds to one of the defined motion patterns, and configured to issue a command to perform the action (52-54) associated with this defined motion pattern to the surveying device (20), and
- the control and evaluation unit (17) is configured to receive the motion data via the remote data connection (5) or to issue the command to the surveying device (20) via the remote data connection (5).

6. Surveying system according to any one of the preceding claims,
**characterized in that**
- the position giving means comprise a GNSS antenna (19), and
- the surveying system comprises a GNSS processing unit configured to process output signals of the GNSS antenna (19) and to derive a referenced position, orientation and/or velocity of the GNSS antenna (19) based on the output signals.

7. Surveying system according to any one of the preceding claims,
**characterized in that**
- the motion tracker (40) is configured to generate motion data (4) regarding derived motions or motion patterns and to provide the motion data to the control and evaluation unit (17), and
- the control and evaluation unit (17) is configured to determine, based on the motion data (4), whether a determined motion corresponds to one of the defined motion patterns, and to issue a command to perform the action (52-54) associated with this defined motion pattern to the surveying device,
wherein the motion tracker (40) is configured to determine at least inertial velocity data as part of the motion data (4), particularly wherein the motion tracker is further configured to determine
- inertial attitude data and inertial position data as part of the motion data,
- a velocity as part of the motion data, and/or
- a yaw angle, a pitch angle and a roll angle of the survey pole (10) as part of the motion data.

8. Surveying system according to claim 7,
wherein the system is configured to establish a data connection with a remote server computer and to provide the motion data (4) to the remote server computer, particularly wherein the system is configured
- to detect typical user behaviour from the motion data (4) and to send corresponding motion data (4) to the remote server computer, wherein the sent data is dedicated to update pre-defined motion patterns stored at the remote server computer, and
- to receive updated pre-defined motion patterns from the remote server computer.

9. Surveying system according to any one of the preceding claims,
**characterized in that**
the system is configured to establish a data connection with a remote server computer and to provide IMU data (8) to the remote server computer, particularly wherein the system is configured
- to detect typical user behaviour from the IMU data (8) and to send corresponding IMU data (8) to the remote server computer, wherein the sent data is dedicated to update pre-defined motion patterns stored at the remote server computer, and
- to receive updated pre-defined motion patterns from the remote server computer.

10. Surveying system according to any one of the preceding claims,
**characterized in that**
the motion tracker (40)
- uses a machine-learning based algorithm for identifying motions and/or motion patterns, and/or
- is provided at the survey pole (10) and comprises the inertial measurement unit (18).

11. Surveying system according to any one of the preceding claims,
**characterized in that**
the inertial measurement unit (18) is integrated in the pole (10) or attached to the pole (10), particularly wherein the inertial measurement unit (18)
- is integrated in the body (13) of the pole (10); or is part of a mobile device, wherein the pole (10) comprises a receptacle for accepting the mobile device;
and/or wherein the inertial measurement unit (18)
- is designed as a micro-electro-mechanical system; and/or
- comprises at least three accelerometers in a mutually orthogonal configuration and at least three gyroscopes in a mutually orthogonal configuration.

12. Surveying system according to any one of the preceding claims, wherein the defined motion patterns comprise
- a depositing motion pattern (41, 42) of the survey pole (10), in which the survey pole (10) is moved from an upright position into a recumbent or reclined position, and/or
- a pick-up motion pattern (43, 44) of the survey pole (10), in which the survey pole (10) is moved from a recumbent or reclined position into an upright position
particularly wherein,
- if the defined motion patterns comprise the depositing motion pattern (41, 42),
- deriving motions and/or motion patterns comprises deriving the upright position of the survey pole (10) and at least one of the recumbent or reclined position of the survey pole (10) or a movement of the survey pole (10) from the upright position to the recumbent or reclined position;
- the survey pole (10) remains motionless or basically motionless in the recumbent or reclined position for at least a pre-defined time, particularly at least five seconds; and/or
- the action associated with the depositing motion pattern (41, 42) comprises stopping tracking of a retroreflector (11) of the survey pole (10) by a surveying device (20) of the surveying system; and
- if the defined motion patterns comprise the pick-up motion pattern (43, 44),
- deriving motions and/or motion patterns comprises deriving the recumbent or reclined position of the survey pole (10) and at least one of the upright position of the survey pole (10) or a movement of the survey pole (10) from the recumbent or reclined position to the upright position;
- the survey pole (10) remains motionless or basically motionless in the recumbent or reclined position for at least a pre-defined time, particularly at least five seconds; and/or
- the action associated with the pick-up motion pattern (43, 44) comprises performing a search by a surveying device (20) of the surveying system for a retroreflector (11) of the survey pole (10).

13. Surveying system according to any one of the preceding claims, wherein
- the pointer tip (12) comprises a spring that is configured and arranged so that it is compressed when the pointer tip (12) is pushed onto a point of an object, particularly the measuring point (1), and released when a predefined amount of compression has been reached; and
- the defined motion patterns comprise a punch-motion pattern, in which the survey pole is pushed with the pointer tip (12) onto a point of the object and the spring is released.

14. Computer-implemented method for controlling a surveying system, particularly a surveying system according to any one of the preceding claims, the surveying system comprising
- a survey pole (10) with a body (13) having a pointer tip (12) for contacting a measuring point (1), and position giving means for making available the coordinative determination of a referenced position, the position giving means being placed on the body (13) with a defined spatial relationship relative to the tip (12), wherein the position giving means comprise a retroreflector (11),
- a surveying device (20) configured to measure positional parameters of the retroreflector (11) comprising angles and a distance (2) to the retroreflector (11) and to derive a referenced position of the retroreflector (11), the survey pole (10) and the surveying device (20) being configured to establish a remote data connection (5) with each other,
- a control and evaluation unit (17) for deriving a position of a measuring point (1) at least based on the determined referenced position and on the defined spatial relationship of the position giving means relative to the tip (12), and
- an inertial measurement unit (18), being provided on the survey pole (10), comprising IMU sensors including accelerometers and gyroscopes, and being configured to continuously generate IMU data (8),
the method comprising
- deriving, based on the continuously generated IMU data and in real time, motions and/or motion patterns (41-46) of the survey pole (10), particularly using a machine-learning algorithm,
- determining whether a derived motion or motion pattern (41-46) corresponds to one of a plurality of pre-defined motion patterns, an action (52-54) for at least one unit or device of the surveying system being associated with each pre-defined motion pattern, and
- issuing a command to perform the action (52-54) associated with the determined pre-defined motion pattern to the respective unit or device of the surveying system,
wherein
- at least a first action that is associated with a first pre-defined motion pattern relates to a function of the surveying device (20), and
- if the derived motion or motion pattern (41-46) corresponds to the first pre-defined motion pattern, a command to perform the first action (52) is sent to the surveying device (20) via the remote data connection (5).

15. Computer programme product comprising programme code which is stored on a machine-readable medium, or being embodied by an electromagnetic wave comprising a programme code segment, and having computer-executable instructions for performing, when executed in a surveying system, particularly in a surveying system according to any one of claims 1 to 13, the method according to claim 14.

## Patentansprüche

1. Vermessungssystem zum Messen der Position eines Messpunkts (1), wobei das Vermessungssystem Folgendes umfasst:
- einen Vermessungsstab (10) mit einem Körper (13), der eine Zeigerspitze (12) zum Kontaktieren des Messpunkts (1) aufweist, und Positionsgebermitteln zum Verfügbarmachen der koordinativen Bestimmung einer referenzierten Position, wobei die Positionsgebermittel mit einer definierten räumlichen Beziehung relativ zu der Spitze (12) an dem Körper (13) angeordnet sind, wobei die Positionsgebermittel einen Rückstrahler (11) umfassen,
- ein Vermessungsgerät (20), das dafür ausgelegt ist, Positionsparameter des Rückstrahlers (11) zu messen, die Winkel und eine Entfernung (2) zu dem Rückstrahler (11) umfassen, und eine referenzierte Position des Rückstrahlers (11) abzuleiten,
- eine Steuerungs- und Auswertungseinheit (17) zum Ableiten der Position des Messpunkts (1) wenigstens auf der Grundlage der bestimmten referenzierten Position und der definierten räumlichen Beziehung der Positionsgebermittel relativ zu der Spitze (12),
- eine inertiale Messeinheit (18), die IMU-Sensoren, einschließlich Beschleunigungsmesser und/oder Gyroskope, umfasst und dafür ausgelegt ist, kontinuierlich IMU-Daten (8) betreffend eine Drehgeschwindigkeit und/oder Beschleunigung des Stabs (10) zu erzeugen, und
- einen Bewegungsverfolger (40), der dafür ausgelegt ist, die IMU-Daten (8) zu empfangen und auf der Grundlage der IMU-Daten und in Echtzeit Bewegungen und/oder Bewegungsmuster (41-46) des Vermessungsstabs (10) abzuleiten, wobei, wenn eine abgeleitete Bewegung oder ein abgeleitetes Bewegungsmuster einem definierten Bewegungsmuster des Vermessungsstabs (10) entspricht, das Vermessungssystem dafür ausgelegt ist, automatisch eine dem definierten Bewegungsmuster zugeordnete Aktion (52-54) durchzuführen,
wobei
- der Vermessungsstab (10) und das Vermessungsgerät (20) dafür ausgelegt sind, eine Datenfernverbindung (5) miteinander herzustellen, und
- die dem bestimmten definierten Bewegungsmuster zugeordnete Aktion (52-54) sich auf eine Funktion des Vermessungsgeräts (20) bezieht.

2. Vermessungssystem nach Anspruch 1,
**gekennzeichnet durch**
eine Datenbank (45), umfassend eine Vielzahl von verschiedenen definierten Bewegungsmustern des Vermessungsstabs (10), wobei jedes definierte Bewegungsmuster einer Aktion (52-54) des Vermessungssystems zugeordnet ist, wobei insbesondere
- die Steuerungs- und Auswertungseinheit (17) die Datenbank (45) umfasst oder Zugriff auf die Datenbank hat; und/oder
- jedes definierte Bewegungsmuster entweder vordefiniert oder benutzerdefiniert ist.

3. Vermessungssystem nach einem der vorhergehenden Ansprüche,
**dadurch gekennzeichnet, dass**
wenigstens ein definiertes Bewegungsmuster ein benutzerdefiniertes Bewegungsmuster ist und die dem benutzerdefinierten Bewegungsmuster zugeordnete Aktion (52-54) ein benutzerdefinierter Arbeitsablauf des Vermessungssystems ist,
wobei das System insbesondere dafür ausgelegt ist, bei Auswahl durch einen Benutzer einen Definitionsprozess auszuführen, wobei die Steuerungs- und Auswertungseinheit (17) dafür ausgelegt ist, auf der Grundlage von Bewegungsdaten (4), die während des Definitionsprozesses empfangen werden, das benutzerdefinierte Bewegungsmuster zu bestimmen und das bestimmte benutzerdefinierte Bewegungsmuster dem vom Benutzer ausgewählten Arbeitsablauf zuzuordnen.

4. Vermessungssystem nach einem der vorhergehenden Ansprüche,
**dadurch gekennzeichnet, dass**
das Vermessungsgerät (20) eine Totalstation oder ein Tachymeter ist.

5. Vermessungssystem nach einem der vorhergehenden Ansprüche,
**dadurch gekennzeichnet, dass**
- der Bewegungsverfolger (40) dafür ausgelegt ist, Bewegungsdaten (4) bezüglich abgeleiteter Bewegungen oder Bewegungsmuster zu erzeugen und die Bewegungsdaten der Steuerungs- und Auswertungseinheit (17) bereitzustellen,
- die Steuerungs- und Auswertungseinheit (17) dafür ausgelegt ist, auf der Grundlage der Bewegungsdaten (4) zu bestimmen, ob eine bestimmte Bewegung einem der definierten Bewegungsmuster entspricht, und dafür ausgelegt ist, einen Befehl zur Durchführung der diesem definierten Bewegungsmuster zugeordneten Aktion (52-54) an das Vermessungsgerät (20) auszugeben, und
- die Steuerungs- und Auswertungseinheit (17) dafür ausgelegt ist, die Bewegungsdaten über die Datenfernverbindung (5) zu empfangen oder den Befehl über die Datenfernverbindung (5) an das Vermessungsgerät (20) auszugeben.

6. Vermessungssystem nach einem der vorhergehenden Ansprüche,
**dadurch gekennzeichnet, dass**
- die Positionsgebermittel eine GNSS-Antenne (19) umfassen, und
- das Vermessungssystem eine GNSS-Verarbeitungseinheit umfasst, die dafür ausgelegt ist, Ausgangssignale der GNSS-Antenne (19) zu verarbeiten und eine referenzierte Position, Ausrichtung und/oder Geschwindigkeit der GNSS-Antenne (19) auf der Grundlage der Ausgangssignale abzuleiten.

7. Vermessungssystem nach einem der vorhergehenden Ansprüche,
**dadurch gekennzeichnet, dass**
- der Bewegungsverfolger (40) dafür ausgelegt ist, Bewegungsdaten (4) bezüglich abgeleiteter Bewegungen oder Bewegungsmuster zu erzeugen und die Bewegungsdaten der Steuerungs- und Auswertungseinheit (17) bereitzustellen, und
- die Steuerungs- und Auswertungseinheit (17) dafür ausgelegt ist, auf der Grundlage der Bewegungsdaten (4) zu bestimmen, ob eine bestimmte Bewegung einem der definierten Bewegungsmuster entspricht, und einen Befehl zur Durchführung der diesem definierten Bewegungsmuster zugeordnete Aktion (52-54) an das Vermessungsgerät auszugeben,
wobei der Bewegungsverfolger (40) dafür ausgelegt ist, wenigstens Inertialgeschwindigkeitsdaten als Teil der Bewegungsdaten (4) zu bestimmen, wobei der Bewegungsverfolger insbesondere ferner dafür ausgelegt ist,
- Inertiallagedaten und Inertialpositionsdaten als Teil der Bewegungsdaten,
- eine Geschwindigkeit als Teil der Bewegungsdaten und/oder
- einen Gierwinkel, einen Nickwinkel und einen Rollwinkel des Vermessungsstabs (10) als Teil der Bewegungsdaten zu bestimmen.

8. Vermessungssystem nach Anspruch 7,
wobei das System dafür ausgelegt ist, eine Datenverbindung mit einem entfernten Server-Computer herzustellen und die Bewegungsdaten (4) dem entfernten Server-Computer bereitzustellen, wobei das System insbesondere dafür ausgelegt ist,
- ein typisches Benutzerverhalten aus den Bewegungsdaten (4) zu erkennen und entsprechende Bewegungsdaten (4) an den entfernten Server-Computer zu senden, wobei die gesendeten Daten dazu bestimmt sind, vordefinierte Bewegungsmuster, die in dem entfernten Server-Computer gespeichert sind, zu aktualisieren, und
- aktualisierte vordefinierte Bewegungsmuster von dem entfernten Server-Computer zu empfangen.

9. Vermessungssystem nach einem der vorhergehenden Ansprüche,
**dadurch gekennzeichnet, dass**
das System dafür ausgelegt ist, eine Datenverbindung mit einem entfernten Server-Computer herzustellen und dem entfernten Server-Computer IMU-Daten (8) bereitzustellen, wobei das System insbesondere dafür ausgelegt ist,
- ein typisches Benutzerverhalten aus den IMU-Daten (8) zu erkennen und entsprechende IMU-Daten (8) an den entfernten Server-Computer zu senden, wobei die gesendeten Daten dazu bestimmt sind, vordefinierte Bewegungsmuster, die in dem entfernten Server-Computer gespeichert sind, zu aktualisieren, und
- aktualisierte vordefinierte Bewegungsmuster von dem entfernten Server-Computer zu empfangen.

10. Vermessungssystem nach einem der vorhergehenden Ansprüche,
**dadurch gekennzeichnet, dass**
der Bewegungsverfolger (40)
- einen auf maschinellem Lernen basierenden Algorithmus verwendet, um Bewegungen und/oder Bewegungsmuster zu identifizieren, und/oder
- an dem Vermessungsstab (10) vorgesehen ist und die inertiale Messeinheit (18) umfasst.

11. Vermessungssystem nach einem der vorhergehenden Ansprüche,
**dadurch gekennzeichnet, dass**
die inertiale Messeinheit (18) in den Stab (10) integriert ist oder an dem Stab (10) befestigt ist, wobei die inertiale Messeinheit (18) insbesondere
- in den Körper (13) des Stabs (10) integriert ist; oder
- Teil eines mobilen Geräts ist, wobei der Stab (10) eine Aufnahme zum Aufnehmen des mobilen Geräts umfasst;
und/oder wobei die inertiale Messeinheit (18)
- als mikroelektromechanisches System ausgebildet ist; und/oder
- wenigstens drei Beschleunigungsmesser in einer zueinander orthogonal angeordneten Konfiguration und wenigstens drei Gyroskope in einer zueinander orthogonal angeordneten Konfiguration umfasst.

12. Vermessungssystem nach einem der vorhergehenden Ansprüche, wobei die definierten Bewegungsmuster Folgendes umfassen:
- ein Ablege-Bewegungsmuster (41, 42) des Vermessungsstabs (10), bei dem der Vermessungsstab (10) von einer aufrechten Position in eine liegende oder zurückgelehnte Position bewegt wird, und/oder
- ein Aufnahme-Bewegungsmuster (43, 44) des Vermessungsstabs (10), bei dem der Vermessungsstab (10) von einer liegenden oder zurückgelehnten Position in eine aufrechte Position bewegt wird,
insbesondere wobei,
- wenn die definierten Bewegungsmuster das Ablege-Bewegungsmuster (41, 42) umfassen,
- das Ableiten von Bewegungen und/oder Bewegungsmustern das Ableiten der aufrechten Position des Vermessungsstabs (10) und wenigstens eines von der liegenden oder zurückgelehnten Position des Vermessungsstabs (10) oder einer Bewegung des Vermessungsstabs (10) von der aufrechten Position in die liegende oder zurückgelehnte Position umfasst;
- der Vermessungsstab (10) während wenigstens eines vordefinierten Zeitraums, insbesondere wenigstens fünf Sekunden, bewegungslos oder im Wesentlichen bewegungslos in der liegenden oder zurückgelehnten Position bleibt; und/oder
- die dem Ablege-Bewegungsmuster (41, 42) zugeordnete Aktion das Stoppen der Verfolgung eines Rückstrahlers (11) des Vermessungsstabs (10) durch ein Vermessungsgerät (20) des Vermessungssystems umfasst; und
- wenn die definierten Bewegungsmuster das Aufnahme-Bewegungsmuster (43, 44) umfassen,
- das Ableiten von Bewegungen und/oder Bewegungsmustern das Ableiten der liegenden oder zurückgelehnten Position des Vermessungsstabs (10) und wenigstens eines von der aufrechten Position des Vermessungsstabs (10) oder einer Bewegung des Vermessungsstabs (10) von der liegenden oder zurückgelehnten Position in die aufrechte Position umfasst;
- der Vermessungsstab (10) während wenigstens eines vordefinierten Zeitraums, insbesondere wenigstens fünf Sekunden, bewegungslos oder im Wesentlichen bewegungslos in der liegenden oder zurückgelehnten Position bleibt; und/oder
- die dem Aufnahme-Bewegungsmuster (43, 44) zugeordnete Aktion das Durchführen einer Suche durch ein Vermessungsgerät (20) des Vermessungssystems nach einem Rückstrahler (11) des Vermessungsstabs (10) umfasst.

13. Vermessungssystem nach einem der vorhergehenden Ansprüche, wobei
- die Zeigerspitze (12) eine Feder umfasst, die derart ausgebildet und angeordnet ist, dass sie komprimiert wird, wenn die Zeigerspitze (12) auf einen Punkt eines Objekts, insbesondere den Messpunkt (1), gedrückt wird, und freigegeben wird, wenn ein vorbestimmtes Maß an Kompression erreicht ist; und
- die definierten Bewegungsmuster ein Stanz-Bewegungsmuster umfassen, bei dem der Vermessungsstab mit der Zeigerspitze (12) auf einen Punkt des Objekts gedrückt wird und die Feder freigegeben wird.

14. Computerimplementiertes Verfahren zur Steuerung eines Vermessungssystems, insbesondere eines Vermessungssystems nach einem der vorhergehenden Ansprüche, wobei das Vermessungssystem Folgendes umfasst:
- einen Vermessungsstab (10) mit einem Körper (13), der eine Zeigerspitze (12) zum Kontaktieren eines Messpunkts (1) aufweist, und Positionsgebermitteln zum Verfügbarmachen der koordinativen Bestimmung einer referenzierten Position, wobei die Positionsgebermittel mit einer definierten räumlichen Beziehung relativ zu der Spitze (12) an dem Körper (13) angeordnet sind, wobei die Positionsgebermittel einen Rückstrahler (11) umfassen,
- ein Vermessungsgerät (20), das dafür ausgelegt ist, Positionsparameter des Rückstrahlers (11) zu messen, die Winkel und eine Entfernung (2) zu dem Rückstrahler (11) umfassen, und eine referenzierte Position des Rückstrahlers (11) abzuleiten, wobei der Vermessungsstab (10) und das Vermessungsgerät (20) dafür ausgelegt sind, eine Datenfernverbindung (5) miteinander herzustellen,
- eine Steuerungs- und Auswertungseinheit (17) zum Ableiten einer Position eines Messpunkts (1) wenigstens auf der Grundlage der bestimmten referenzierten Position und der definierten räumlichen Beziehung der Positionsgebermittel relativ zu der Spitze (12), und
- eine an dem Vermessungsstab (10) vorgesehene inertiale Messeinheit (18), die IMU-Sensoren, einschließlich Beschleunigungsmesser und Gyroskope, umfasst und dafür ausgelegt ist, kontinuierlich IMU-Daten (8) zu erzeugen,
wobei das Verfahren Folgendes umfasst
- Ableiten, auf der Grundlage der kontinuierlich erzeugten IMU-Daten und in Echtzeit, von Bewegungen und/oder Bewegungsmustern (41-46) des Vermessungsstabs (10), insbesondere unter Verwendung eines Algorithmus für maschinelles Lernen,
- Bestimmen, ob eine abgeleitete Bewegung oder ein abgeleitetes Bewegungsmuster (41-46) einem einer Vielzahl von vordefinierten Bewegungsmustern entspricht, wobei jedem vordefinierten Bewegungsmuster eine Aktion (52-54) für wenigstens eine Einheit oder Vorrichtung des Vermessungssystems zugeordnet ist, und
- Ausgeben eines Befehls zur Durchführung der dem bestimmten vordefinierten Bewegungsmuster zugeordneten Aktion (52-54) an die jeweilige Einheit oder Vorrichtung des Vermessungssystems,
wobei
- wenigstens eine erste Aktion, die einem ersten vordefinierten Bewegungsmuster zugeordnet ist, sich auf eine Funktion des Vermessungsgeräts (20) bezieht, und
- wenn die abgeleitete Bewegung oder das abgeleitete Bewegungsmuster (41-46) dem ersten vordefinierten Bewegungsmuster entspricht, ein Befehl zur Durchführung der ersten Aktion (52) über die Datenfernverbindung (5) an das Vermessungsgerät (20) gesendet wird.

15. Computerprogrammprodukt, das einen Programmcode umfasst, der auf einem maschinenlesbaren Medium gespeichert ist oder durch eine elektromagnetische Welle verkörpert wird, die ein Programmcodesegment umfasst, und das computerausführbare Anweisungen aufweist, um bei Ausführung in einem Vermessungssystem, insbesondere in einem Vermessungssystem nach einem der Ansprüche 1 bis 13, das Verfahren nach Anspruch 14 durchzuführen.

## Revendications

1. Système d'arpentage pour mesurer la position d'un point de mesure (1), le système d'arpentage comprenant
- une perche d'arpentage (10) avec un corps (13) ayant une pointe de pointeur (12) pour entrer en contact avec le point de mesure (1), et des moyens d'indication de position pour rendre disponible la détermination coordonnée d'une position référencée, les moyens d'indication de position étant placés sur le corps (13) avec une relation spatiale définie par rapport à la pointe (12), dans lequel les moyens d'indication de position comprennent un rétroréflecteur (11),
- un dispositif d'arpentage (20) configuré pour mesurer des paramètres de position du rétroréflecteur (11) comprenant des angles et une distance (2) par rapport au rétroréflecteur (11) et pour dériver une position référencée du rétroréflecteur (11),
- une unité de commande et d'évaluation (17) pour dériver la position du point de mesure (1) au moins d'après la position référencée déterminée et la relation spatiale définie des moyens d'indication de position par rapport à la pointe (12),
- une unité de mesure inertielle (18) comprenant des capteurs IMU incluant des accéléromètres et/ou des gyroscopes, et configurée pour générer en continu des données IMU (8) relatives à une cadence de rotation et/ou à une accélération de la perche (10), et
- un suiveur de mouvement (40) configuré pour recevoir les données IMU (8) et pour dériver, d'après les données IMU et en temps réel, des mouvements et/ou des motifs de mouvement (41 à 46) de la perche d'arpentage (10), dans lequel, si un mouvement ou un motif de mouvement dérivé correspond à un motif de mouvement défini de la perche d'arpentage (10), le système d'arpentage est configuré pour réaliser automatiquement une action (52 à 54) associée au motif de mouvement défini,
dans lequel
- la perche d'arpentage (10) et le dispositif d'arpentage (20) sont configurés pour établir une connexion de données à distance (5) l'un avec l'autre, et
- l'action (52 à 54) associée au motif de mouvement défini déterminé se rapporte à une fonction du dispositif d'arpentage (20).

2. Système d'arpentage selon la revendication 1,
**caractérisé par**
une base de données (45) comprenant une pluralité de différents motifs de mouvement définis de la perche d'arpentage (10), chaque motif de mouvement défini étant associé à une action (52 à 54) du système d'arpentage, en particulier dans lequel
- l'unité de commande et d'évaluation (17) comprend la base de données (45) ou a accès à la base de données ; et/ou
- chaque motif de mouvement défini est soit prédéfini, soit défini par utilisateur.

3. Système d'arpentage selon l'une quelconque des revendications précédentes,
**caractérisé en ce que**
au moins un motif de mouvement défini est un motif de mouvement défini par utilisateur, et l'action (52 à 54) associée au motif de mouvement défini par utilisateur est un flux de travail défini par utilisateur du système d'arpentage,
en particulier dans lequel le système est configuré pour exécuter, sur sélection par un utilisateur, un processus de définition, dans lequel l'unité de commande et d'évaluation (17) est configurée pour déterminer, d'après des données de mouvement (4) reçues pendant le processus de définition, le motif de mouvement défini par utilisateur et pour associer le motif de mouvement défini par utilisateur déterminé au flux de travail sélectionné par utilisateur.

4. Système d'arpentage selon l'une quelconque des revendications précédentes,
**caractérisé en ce que**
le dispositif d'arpentage (20) est une station totale ou un tachéomètre.

5. Système d'arpentage selon l'une quelconque des revendications précédentes,
**caractérisé en ce que**
- le suiveur de mouvement (40) est configuré pour générer des données de mouvement (4) concernant des mouvements ou des motifs de mouvement dérivés et pour fournir les données de mouvement à l'unité de commande et d'évaluation (17),
- l'unité de commande et d'évaluation (17) est configurée pour déterminer, d'après les données de mouvement (4), si un mouvement déterminé correspond à l'un des motifs de mouvement définis, et configurée pour émettre un ordre pour réaliser l'action (52 à 54) associée à ce motif de mouvement défini au dispositif d'arpentage (20), et
- l'unité de commande et d'évaluation (17) est configurée pour recevoir les données de mouvement via la connexion de données à distance (5) ou pour émettre l'ordre au dispositif d'arpentage (20) via la connexion de données à distance (5).

6. Système d'arpentage selon l'une quelconque des revendications précédentes,
**caractérisé en ce que**
- les moyens d'indication de position comprennent une antenne GNSS (19), et
- le système d'arpentage comprend une unité de traitement GNSS configurée pour traiter des signaux de sortie de l'antenne GNSS (19) et pour dériver une position, une orientation et/ou une vitesse référencées de l'antenne GNSS (19) d'après les signaux de sortie.

7. Système d'arpentage selon l'une quelconque des revendications précédentes,
**caractérisé en ce que**
- le suiveur de mouvement (40) est configuré pour générer des données de mouvement (4) concernant des mouvements ou des motifs de mouvement dérivés et pour fournir les données de mouvement à l'unité de commande et d'évaluation (17), et
- l'unité de commande et d'évaluation (17) est configurée pour déterminer, d'après les données de mouvement (4), si un mouvement déterminé correspond à l'un des motifs de mouvement définis, et pour émettre un ordre pour réaliser l'action (52 à 54) associée à ce motif de mouvement défini au dispositif d'arpentage,
dans lequel le suiveur de mouvement (40) est configuré pour déterminer au moins des données de vitesse inertielle dans le cadre des données de mouvement (4), en particulier dans lequel le suiveur de mouvement est en outre configuré pour déterminer
- des données d'attitude inertielle et des données de position inertielle dans le cadre des données de mouvement,
- une vitesse dans le cadre des données de mouvement, et/ou
- un angle de lacet, un angle de tangage et un angle de roulis de la perche d'arpentage (10) dans le cadre des données de mouvement.

8. Système d'arpentage selon la revendication 7,
le système étant configuré pour établir une connexion de données avec un ordinateur serveur distant et pour fournir les données de mouvement (4) à l'ordinateur serveur distant, en particulier le système étant configuré
- pour détecter un comportement typique d'utilisateur à partir des données de mouvement (4) et pour envoyer des données de mouvement (4) correspondantes à l'ordinateur serveur distant, dans lequel les données envoyées sont dédiées à la mise à jour de motifs de mouvement prédéfinis stockés au niveau de l'ordinateur serveur distant, et
- pour recevoir de l'ordinateur serveur distant des motifs de mouvement prédéfinis mis à jour.

9. Système d'arpentage selon l'une quelconque des revendications précédentes,
**caractérisé en ce que**
le système est configuré pour établir une connexion de données avec un ordinateur serveur distant et pour fournir des données IMU (8) à l'ordinateur serveur distant, en particulier le système étant configuré
- pour détecter un comportement typique d'utilisateur à partir des données IMU (8) et pour envoyer des données IMU (8) correspondantes à l'ordinateur serveur distant, dans lequel les données envoyées sont dédiées à la mise à jour de motifs de mouvement prédéfinis stockés au niveau de l'ordinateur serveur distant, et
- pour recevoir de l'ordinateur serveur distant des motifs de mouvement prédéfinis mis à jour.

10. Système d'arpentage selon l'une quelconque des revendications précédentes,
**caractérisé en ce que**
le suiveur de mouvement (40)
- utilise un algorithme basé sur l'apprentissage automatique pour identifier des mouvements et/ou des motifs de mouvement, et/ou
- est prévu au niveau de la perche d'arpentage (10) et comprend l'unité de mesure inertielle (18).

11. Système d'arpentage selon l'une quelconque des revendications précédentes,
**caractérisé en ce que**
l'unité de mesure inertielle (18) est intégrée dans la perche (10) ou attachée à la perche (10), en particulier dans lequel l'unité de mesure inertielle (18)
- est intégrée dans le corps (13) de la perche (10) ; ou
- fait partie d'un dispositif mobile, dans lequel la perche (10) comprend un réceptacle pour accepter le dispositif mobile ;
et/ou dans lequel l'unité de mesure inertielle (18)
- est conçue comme un système microélectromécanique ; et/ou
- comprend au moins trois accéléromètres dans une configuration mutuellement orthogonale et au moins trois gyroscopes dans une configuration mutuellement orthogonale.

12. Système d'arpentage selon l'une quelconque des revendications précédentes, dans lequel les motifs de mouvement définis comprennent
- un motif de mouvement de dépôt (41, 42) de la perche d'arpentage (10), dans lequel la perche d'arpentage (10) est déplacée d'une position debout à une position couchée ou inclinée, et/ou
- un motif de mouvement de ramassage (43, 44) de la perche d'arpentage (10), dans lequel la perche d'arpentage (10) est déplacée d'une position couchée ou inclinée à une position debout,
en particulier dans lequel,
- si les motifs de mouvement définis comprennent le motif de mouvement de dépôt (41, 42),
- la dérivation des mouvements et/ou des motifs de mouvement comprend la dérivation de la position debout de la perche d'arpentage (10) et d'au moins un parmi la position couchée ou inclinée de la perche d'arpentage (10) ou un mouvement de la perche d'arpentage (10) de la position debout à la position couchée ou inclinée ;
- la perche d'arpentage (10) reste immobile ou pratiquement immobile dans la position couchée ou inclinée pendant au moins un temps prédéfini, en particulier au moins cinq secondes ; et/ou
- l'action associée au motif de mouvement de dépôt (41, 42) comprend l'arrêt du suivi d'un rétroréflecteur (11) de la perche d'arpentage (10) par un dispositif d'arpentage (20) du système d'arpentage ; et
- si les motifs de mouvement définis comprennent le motif de mouvement de ramassage (43, 44),
- la dérivation des mouvements et/ou des motifs de mouvement comprend la dérivation de la position couchée ou inclinée de la perche d'arpentage (10) et d'au moins un parmi la position debout de la perche d'arpentage (10) ou un mouvement de la perche d'arpentage (10) de la position couchée ou inclinée à la position debout ;
- la perche d'arpentage (10) reste immobile ou pratiquement immobile dans la position couchée ou inclinée pendant au moins un temps prédéfini, en particulier au moins cinq secondes ; et/ou
- l'action associée au motif de mouvement de ramassage (43, 44) comprend la réalisation d'une recherche par un dispositif d'arpentage (20) du système d'arpentage pour un rétroréflecteur (11) de la perche d'arpentage (10).

13. Système d'arpentage selon l'une quelconque des revendications précédentes, dans lequel
- la pointe de pointeur (12) comprend un ressort qui est configuré et agencé de sorte à être comprimé lorsque la pointe de pointeur (12) est poussée sur un point d'un objet, en particulier le point de mesure (1), et à être relâché lorsqu'une quantité prédéfinie de compression a été atteinte ; et
- les motifs de mouvement définis comprennent un motif de mouvement de poinçonnage, dans lequel la perche d'arpentage est poussée avec la pointe de pointeur (12) sur un point de l'objet et le ressort est relâché.

14. Procédé mis en œuvre par ordinateur pour commander un système d'arpentage, en particulier un système d'arpentage selon l'une quelconque des revendications précédentes, le système d'arpentage comprenant
- une perche d'arpentage (10) avec un corps (13) ayant une pointe de pointeur (12) pour entrer en contact avec un point de mesure (1), et des moyens d'indication de position pour rendre disponible la détermination coordonnée d'une position référencée, les moyens d'indication de position étant placés sur le corps (13) avec une référence spatiale définie par rapport à la pointe (12), dans lequel les moyens d'indication de position comprennent un rétroréflecteur (11),
- un dispositif d'arpentage (20) configuré pour mesurer des paramètres de position du rétroréflecteur (11) comprenant des angles et une distance (2) par rapport au rétroréflecteur (11) et pour dériver une position référencée du rétroréflecteur (11), la perche d'arpentage (10) et le dispositif d'arpentage (20) étant configurés pour établir une connexion de données à distance (5) l'un avec l'autre,
- une unité de commande et d'évaluation (17) pour dériver une position d'un point de mesure (1) au moins d'après la position référencée déterminée et la relation spatiale définie des moyens d'indication de position par rapport à la pointe (12), et
- une unité de mesure inertielle (18), prévue sur la perche d'arpentage (10), comprenant des capteurs IMU incluant des accéléromètres et des gyroscopes, et configurée pour générer en continu des données IMU (8),
le procédé comprenant
- la dérivation, d'après les données IMU générées en continu et en temps réel, de mouvements et/ou de motifs de mouvement (41 à 46) de la perche d'arpentage (10), en particulier à l'aide d'un algorithme d'apprentissage automatique,
- la détermination pour savoir si un mouvement ou un motif de mouvement dérivé (41 à 46) correspond à l'un d'une pluralité de motifs de mouvement prédéfinis, une action (52 à 54) pour au moins une unité ou un dispositif du système d'arpentage étant associée à chaque motif de mouvement prédéfini, et
- l'émission d'un ordre pour réaliser l'action (52 à 54) associée au motif de mouvement prédéfini déterminé à l'unité ou au dispositif respectif du système d'arpentage,
dans lequel
- au moins une première action qui est associée à un premier motif de mouvement prédéfini se rapporte à une fonction du dispositif d'arpentage (20), et
- si le mouvement ou le motif de mouvement (41 à 46) dérivé correspond au premier motif de mouvement prédéfini, un ordre pour réaliser la première action (52) est envoyé au dispositif d'arpentage (20) via la connexion de données à distance (5).

15. Produit de programme d'ordinateur comprenant un code de programme qui est stocké sur un support lisible par machine, ou étant incarné par une onde électromagnétique comprenant un segment de code de programme, et ayant des instructions exécutables par ordinateur pour réaliser, lorsqu'il est exécuté dans un système d'arpentage, en particulier dans un système d'arpentage selon l'une quelconque des revendications 1 à 13, le procédé selon la revendication 14.
